(19) Europäisches Patentamt
European Patent Office
Office européen des brevets

(11) **EP 2 094 613 B1**

(12) **FASCICULE DE BREVET EUROPEEN**

(45) Date de publication et mention
de la délivrance du brevet:
**14.09.2011 Bulletin 2011/37**

(21) Numéro de dépôt: **07847153.9**

(22) Date de dépôt: **13.11.2007**

(51) Int Cl.:
*C02F 11/14* ^(2006.01)

(86) Numéro de dépôt international:
**PCT/EP2007/062296**

(87) Numéro de publication internationale:
**WO 2008/058973 (22.05.2008 Gazette 2008/21)**

(54) **PROCÉDÉ DE TRAITEMENT DE BOUES**

VERFAHREN ZUR VERARBEITUNG VON SCHLAMM

METHOD FOR PROCESSING SLUDGE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **14.11.2006 EP 06123985**

(43) Date de publication de la demande:
**02.09.2009 Bulletin 2009/36**

(73) Titulaire: **S.A. LHOIST RECHERCHE ET DEVELOPPEMENT**
**1342 Ottignies-Louvain-La-Neuve (BE)**

(72) Inventeur: **REMY, Marc Joseph Henri**
**1457 Nil-Saint-Martin (BE)**

(74) Mandataire: **Luys, Marie-José A.H. et al**
**Gevers**
**Intellectual Property House**
**Holidaystraat 5**
**1831 Diegem (BE)**

(56) Documents cités:
**EP-A1- 0 976 436      WO-A-02/092701**
**DE-A1- 4 306 652      JP-A- 56 076 293**
**JP-A- 61 092 227      US-A- 5 616 283**

Remarques:
Le dossier contient des informations techniques présentées postérieurement au dépôt de la demande et ne figurant pas dans le présent fascicule.

**Description**

La présente invention concerne un procédé de traitement de boues, comprenant

- une addition à des boues présentant une première valeur de pH d'un agent basique à base de chaux, en vue d'une élévation du pH à une deuxième valeur supérieure à la première,
- une addition d'au moins un floculant organique anionique, actif à ladite deuxième valeur de pH,
- une floculation des boues, et
- une séparation dans les boues floculées entre des boues déshydratées et une phase liquide.

Ce procédé concerne le traitement de boues organiques ou huileuses.

Par boues organiques ou huileuses, il faut entendre au sens de la présente invention, toutes les boues, à l'exclusion des boues minérales selon la classification reprise aux pages 119 à 123 de l'ouvrage repris ici en référence : Mémento technique de l'eau, 9è éd., éd. du Cinquantenaire, Rueil-Malmaison : Degrémont, 1989, 2 vol.. Parmi ces boues organiques ou huileuses, on trouve, par exemple, les boues de station d'épuration des eaux urbaines et des industries agroalimentaires. On peut aussi envisager d'autres boues éventuellement plus acides. Le pH initial de ces boues est inférieur à 9, souvent inférieur à 8.

D'une manière générale, les boues sont tout d'abord décantées avant d'être épaissies. On les soumet ensuite à une étape d'agrégation, appelée coagulation et/ou floculation, suivie d'une déshydratation, c'est-à-dire une séparation solide/liquide, réalisée dans la plupart des cas au moyen d'un filtre à bandes, d'un filtre-presse ou d'un décanteur centrifuge. Outre la réduction de volume, l'objet de ce traitement est de faciliter la manipulation, le transport et le stockage de ces boues.

Une incorporation d'un composé calcique, généralement de la chaux, est souvent associée au traitement précité, afin d'hygiéniser et de stabiliser les boues pour leur stockage à long terme (tenue en tas, etc.) et d'améliorer durablement leurs propriétés d'usage (pelletabilité, épandabilité, etc.) ou en vue d'augmenter leur valeur agronomique [Acta 5th European Biosolids and Organic Residuals Conference, Wakefield (UK), November 2000, paper 66].

On entend par chaux vive, une matière solide minérale dont la composition chimique est principalement de l'oxyde de calcium CaO. La chaux vive contient des impuretés, à savoir, des composés tels que de l'oxyde de magnésium MgO, de la silice $SiO_2$ ou encore de l'alumine $Al_2O_3$, etc., à hauteur de quelques pour-cents. Il est entendu que ces impuretés sont exprimées sous les formes précitées mais peuvent en réalité apparaître sous des phases différentes. En particulier, ce qui est exprimé sous la forme de silice peut en réalité provenir en grande partie de silicates.

On entend par chaux éteinte ou chaux hydratée, un ensemble de particules solides, principalement sous forme d'hydroxyde de calcium $Ca(OH)_2$, obtenu par "extinction", parfois appelée "hydratation", de chaux vive avec de l'eau. Cette chaux éteinte peut évidemment contenir les impuretés précitées, issues de la chaux vive.

On entend par lait de chaux, une suspension aqueuse, fabriquée au départ de chaux vive ou de chaux hydratée.

Par floculant anionique organique, on entend un polymère anionique présentant un poids moléculaire supérieur à 500.000 Da, de préférence supérieur à 1.000.000 Da et plus préférentiellement supérieur à 5.000.000 Da. Généralement les polymères sont classés selon leur longueur de chaîne, à savoir les polymères à chaîne courte et les polymères à chaîne longue. Typiquement, les polymères à chaîne courte ont un poids moléculaire moyen de quelques milliers à quelques dizaines de milliers de Da. Leur taille leur permet de s'infiltrer entre d'autres molécules ce qui leur confère un caractère dispersant. Les polymères à chaîne longue ont un poids moléculaire allant de quelques centaines de milliers à quelques millions de Da. La chaîne longue leur permet de «ponter» d'autres molécules, ce qui leur confère un caractère floculant.

La chaux peut être ajoutée à la boue avant (pré-chaulage) ou après (post-chaulage) l'étape de déshydratation précitée.

Outre le fait que le post-chaulage constitue une étape supplémentaire de mélange dans le procédé de traitement des boues, cette opération additionnelle présente plusieurs inconvénients, parmi lesquels :

- la déstructuration de la boue,
- la difficulté de mélanger la chaux à la boue déshydratée et, par conséquent,
- l'inhomogénéité de la répartition de la chaux dans le milieu.

Toutes ces raisons ont conduit à envisager l'ajout de chaux par préchaulage, avant la déshydratation.

L'agrégation précitée est généralement facilitée par l'ajout d'un agent coagulant, parmi lesquels des sels de fer ou d'aluminium, comme proposé dans la demande WO 2006/030102. Cependant, l'utilisation de ces sels présente de nombreux inconvénients, parmi lesquels l'augmentation importante de la quantité de matière sèche dans la boue, une attaque de presque tous les métaux, y compris des aciers inoxydables, en raison de leur caractère hautement corrosif et un danger pour les opérateurs, en raison du caractère irritant, voire toxique, des poussières dégagées par ces sels lors de leur manipulation.

Afin de pallier ces inconvénients, il est devenu pratique courante de faciliter la floculation au moyen de composés organiques; dans ce cas, l'usage de floculants cationiques est généralement adapté au traitement des boues organiques, comme signalé dans le brevet EP 0 976 436 A1.

Toutefois, les polymères cationiques se dégradent en général rapidement à partir d'un pH de 9 à 10, comme signalé dans l'état de l'art du brevet EP 1 154 958 B1. Dans de nombreux cas, l'opération de préchaulage ne pourra alors pas s'effectuer juste avant la floculation car le polymère cationique n'a pas le temps d'agir avant que le pH de la boue n'atteigne la valeur critique à partir de laquelle une défloculation apparaît, en raison de l'ajout de chaux. Le brevet européen précité EP 1154958 et la demande de brevet internationale WO2005/014495, notamment, proposent donc de résoudre ce problème en utilisant des composés calciques ou calco-magnésiens spécifiques, qui produisent une montée en pH de la boue suffisamment retardée pour que le polymère cationique ait le temps d'agir comme floculant avant la séparation solide/liquide. Cependant, les composés spécifiques précités ne conviennent pas à tous les cas d'application.

En effet, dans la pratique, le maintien après chaulage, jusqu'à la fin de la floculation, d'un pH à une valeur inférieure à celle provoquant la dégradation du floculant organique cationique va dépendre du débit de chaux, du niveau de basicité retardée de la chaux utilisée, de la teneur en matière sèche et du pouvoir tampon de la boue liquide. Etant donné qu'en conditions industrielles la teneur en matière sèche et le pouvoir tampon de la boue peuvent fluctuer assez fort, la mise en oeuvre de ces procédés faisant usage de chaux à basicité retardée apparaît parfois délicate. Un autre désavantage de l'utilisation de floculant organique cationique en association avec de la chaux est l'émission d'amines volatiles, émission favorisée à pH élevé (CHANG, J.; ABU-ORF, M.; DENTEL, S., Alkylamine odors from degradation of flocculant polymers in sludges., Water Research, 2005, 39(14), pp. 3369-3375). Enfin, l'usage de composés retardant la montée en pH conduit à un allongement volontaire de l'étape combinée de floculation et préchaulage, non compatible avec certains procédés de déshydratation en continu.

Par ailleurs, la demande WO-9605142 propose un procédé tel qu'indiqué au début. Ce procédé prévoit une floculation non de boues, mais d'un flux d'eau usée ayant un pH supérieur à 10,2, comprenant une augmentation de son pH à une valeur supérieure à 10,2 si ce n'est pas le cas initialement, un ajout d'ions Mg et un mélange vigoureux avec un floculant fortement anionique à haut poids moléculaire. L'augmentation de pH peut se faire indifféremment par MgO, de la chaux ou de l'hydroxyde de sodium. De façon semblable, la demande JP-54025268 décrit un procédé de floculation de boue comprenant l'ajout d'un alcali, NaOH ou KOH, en vue d'obtenir un pH supérieur à 10, suivi d'un ajout de $CaCl_2$ et ensuite de l'ajout d'un floculant anionique et/ou non ionique. Ces deux procédés requièrent plusieurs étapes, notamment une augmentation du pH de la boue au-delà de 10, et ensuite l'ajout de Mg ou de $CaCl_2$, préalablement à l'ajout du floculant anionique, ce qui allonge considérablement la durée du traitement des boues ou réduit le temps de floculation.

On prévoit dans la demande JP-A-04-040286 une application à des boues de pêcheries d'un composé de calcium soluble dans l'eau et, avant ou après cette application, une addition d'un floculant organique, celui-ci pouvant être cationique, anionique ou non ionique. Dans ce cas, seul le pH de la phase aqueuse est pris en considération, en recommandant une neutralisation par un acide de celle-ci après l'addition d'un composé de calcium basique. Dans tous les exemples donnés, les boues traitées sont au départ fortement basiques et une neutralisation intervient toujours entre l'application du composé de calcium et l'addition du floculant organique. On utilise, à titre de composé de calcium soit des composés fortement basiques du type chaux soit des sels de calcium comme des halogénures, du nitrate ou de l'acétate. L'objectif recherché est une eau épurée, résultant du traitement des boues.

La présente invention vise à pallier les inconvénients de l'art antérieur précité, en prévoyant un procédé qui permette un traitement des boues simple, rapide et de préférence continu, dont le nombre d'étapes successives sera le plus limité possible, la finalité étant d'obtenir une floculation la plus complète possible et une boue déshydratée homogène ayant les meilleures propriétés en termes d'hygiénisation, de stabilisation ou d'autres propriétés d'usage.

Pour résoudre ces problèmes, la présente invention prévoit un procédé de traitement de boues tel qu'indiqué au début, dans lequel, les boues à déshydrater présentent, comme première valeur de pH susdite, une valeur inférieure à 9, et l'agent basique à base de chaux provoque ladite élévation du pH jusqu'à ladite deuxième valeur susdite en moins de 5 minutes.

Le procédé de traitement des boues selon l'invention résout les problèmes de la durée de floculation associée au préchaulage, et/ou permet de réduire la quantité de floculant à ajouter notamment en comparaison de l'utilisation de floculants cationiques. Par ailleurs, le nombre d'étapes du traitement des boues selon l'invention est limité, tout en proposant un procédé simple et rapide, adapté à une large gamme d'applications, qui permet un gain de siccité de la boue déshydratée. Cette boue déshydratée selon l'invention possède toutes les propriétés attendues d'une boue chaulée, en termes d'hygiénisation et de stabilisation pour le stockage à long terme (tenue en tas, etc.) ainsi que d'amélioration durable de ses propriétés d'usage (pelletabilité, épandabilité, etc.) ou encore d'augmentation de sa valeur agronomique.

Ce traitement est donc un traitement de boues par préchaulage.

Les floculants anioniques apparaissent inactifs pour la floculation des boues organiques à des valeurs de pH inférieures à 10, en particulier à 11, voire 12.

Suivant l'invention on résout le problème de l'inactivité des floculants anioniques par l'ajout à la boue à déshydrater qui présente une valeur de pH inférieure à 9, en particulier inférieure à 8, d'un agent basique à base de chaux capable de produire une augmentation rapide du pH au-delà de 11, de préférence de 12, de façon à permettre une floculation complète par le floculant anionique devenu actif, avant l'étape de séparation solide/liquide (déshydratation). Pour cela, l'augmentation de pH doit se faire suffisamment rapidement (moins de 5 minutes, de préférence moins de 3 minutes, avantageusement moins de 2 minutes ou même moins de 1 minute), de façon que la déshydratation puisse commencer dans un temps court suivant l'ajout de l'agent basique à base de chaux et du floculant anionique, tout en permettant une floculation satisfaisante de la boue.

Le procédé, en prévoyant l'usage de floculant anionique, fait disparaître l'inconvénient de la dégradation prématurée des floculants, rencontrée usuellement lors de l'application de floculants cationiques.

Le procède prévoit que, l'agent basique à base de chaux et ledit au moins un floculant sont destinés à une application simultanée ou séparée dans le temps sur les boues. L'ordre d'introduction n'est pas critique. On peut aussi bien prévoir l'addition de chaux avant, simultanément ou après le floculant, de préférence avant.

Ainsi, le procédé de traitement des boues selon l'invention permet un traitement en un nombre d'étapes limité; après l'éventuelle étape initiale de décantation/épaississement généralement effectuée, n'intervient qu'une étape d'ajout et mélange du floculant, à laquelle est associée l'ajout de l'agent basique à base de chaux, suivie de l'étape de déshydratation (séparation solide/liquide). Aucune autre étape préalable, intermédiaire ou postérieure n'est nécessaire, puisque le chaulage est combiné à l'étape de floculation. Par ailleurs, le solide après déshydratation possède tous les avantages attendus d'une boue chaulée, en termes d'homogénéité, d'hygiénisation, de manipulation et de stabilisation pour le stockage à long terme (tenue en tas, etc.) ainsi que d'amélioration durable de ses propriétés d'usage (pelletabilité, épandabilité, etc.) ou encore d'augmentation de sa valeur agronomique.

Il est important que l'augmentation du pH de la boue soit rapide, de façon à réduire au maximum la durée de l'étape de floculation préalable à la déshydratation et à permettre notamment une séparation solide/liquide en continu, en particulier au moyen de centrifugeuses ou de filtres à bandes.

Selon l'invention, la floculation de la boue, en particulier organique ou huileuse, est réalisée avec, comme floculant, un polymère anionique présentant un poids moléculaire supérieur à 500.000 Da, de préférence supérieur à 1.000.000 Da, de manière plus préférentielle entre $5.10^6$ et $35.10^6$ Da et de la manière la plus préférentielle entre $15.10^6$ et $30.10^6$ Da ; et le préchaulage associé à l'étape de floculation est effectué par ajout de l'agent basique à base de chaux suivant l'invention.

Suivant une forme de réalisation avantageuse de l'invention, l'agent basique à base de chaux est choisi parmi le groupe constitué de chaux sous forme vive, sous forme partiellement ou totalement éteinte pulvérulente ou sous forme éteinte en suspension dans une phase aqueuse qui nécessite, pour atteindre un pH de 12 dans une solution aqueuse de $NH_4Cl/(NH_4)_2HPO_4$ présentant un pH initial de 7,5, un temps $t_{pH12}$ égal ou inférieur à 90 secondes, de préférence égal ou inférieur à 60 secondes, la procédure de détermination du $t_{pH12}$ étant la suivante :

13,24 g de $NH_4Cl$ et 3,465g de $(NH_4)_2HPO_4$ sont dissous dans 1 l d'eau désionisée.

200g de la solution de $NH_4Cl/(NH_4)_2HPO_4$ sont introduits dans un Becher de 500 $cm^3$ et maintenus sous agitation mécanique à 400 tours par minute. Une électrode de pH est alors placée dans cette solution ce qui permet d'enregistrer l'évolution du pH dans le temps.

1,2 g de chaux en poudre ou l'équivalent en matière solide dans le cas de laits de chaux sont pesés et introduits dans la solution de $NH_4Cl/(NH_4)_2HPO_4$.

Le pH initial de la solution est de 7,5 et évolue, après ajout de la chaux, jusqu'à une valeur supérieure à 12.

Le test est considéré comme terminé lorsque la valeur du pH est stabilisée.

L'opération est répétée une seconde fois et le temps moyen pour atteindre pH 12, paramètre noté $t_{pH12}$, est déterminé sur la base des deux courbes obtenues.

De telles chaux peuvent être qualifiées de chaux à basicité accélérée, par opposition aux chaux à basicité retardée généralement appliquées dans l'art antérieur. La forme lait de chaux permet en particulier un mélange intime aisé avec la boue à traiter.

On peut avantageusement prévoir comme chaux suivant l'invention des chaux, aussi bien sous la forme pulvérulente que de suspension, qui sont formées de particules ayant un $d_{50}$ égal ou inférieur à 30 $\mu$m, de préférence égal ou inférieur à 20 $\mu$m.

D'une façon préférentielle la chaux est une chaux vive partiellement éteinte, présentant une proportion de chaux éteinte, ou taux d'hydratation, située entre 1 et 20% en poids. Préférentiellement, l'ensemble des particules d'une telle chaux présente une dimension inférieure à 500 $\mu$m, de préférence à 100 $\mu$m.

Suivant une forme de réalisation perfectionnée de l'invention, la chaux est une chaux vive partiellement éteinte ou un lait de chaux contenant une teneur en hydroxyde de métal alcalin. De préférence cette chaux contient une teneur

< 0 et > 10% en poids d'hydroxyde de métal alcalin. Comme hydroxyde de métal alcalin on prévoit de préférence du NaOH ou du KOH.

Il apparaît en effet que l'ajout à une boue quelconque d'un lait de chaux contenant une faible teneur, a priori moins de 10% en poids par rapport à $Ca(OH)_2$, en hydroxyde alcalin, notamment NaOH ou KOH, entraîne une augmentation encore plus rapide du pH du milieu que le lait de chaux correspondant, non dopé à l'hydroxyde alcalin.

De surcroît et de façon non prévisible, la boue déshydratée issue d'un préchaulage par un lait de chaux dopé à l'hydroxyde alcalin présente finalement une teneur en matière sèche supérieure à celle obtenue dans les mêmes conditions de traitement, mais avec un lait de chaux correspondant non dopé. Ce gain de siccité est important car il améliore globalement l'efficacité du traitement de la boue et du chaulage.

Suivant l'invention ledit au moins un floculant organique anionique, peut être choisi par exemple parmi le groupe constitué de polyélectrolytes à base de polymères ou copolymères d'acide acrylique, d'acrylates, d'acrylamide et de leurs mélanges. De façon inattendue, le procédé suivant l'invention de traitement des boues, en particulier organiques ou huileuses, permet d'obtenir la déshydratation d'une boue en recourant à un ajout de floculant anionique nettement moins important que, dans un cas analogue, à l'aide d'un floculant cationique de l'art antérieur. En général, pour une boue donnée et un résultat de déshydratation fixé, la consommation de floculant anionique est réduite d'environ $\frac{1}{2}$ à $\frac{2}{3}$, par rapport à la consommation de floculant cationique.

D'autres modes de réalisation du procédé suivant l'invention sont indiqués dans les revendications annexées.

L'invention va maintenant être décrite plus en détail au moyen d'exemples non limitatifs. Ces exemples font état de lait de chaux à 20% de matière sèche, par mise en suspension sous agitation de 200 g de chaux éteinte ($Ca(OH)_2$) dans 0,8 $dm^3$ d'eau. Les laits de chaux activés à la soude s'obtiennent au départ du lait précité en ajoutant sous agitation du NaOH en paillettes, à raison de 2,5 g, 6,3 g et 15,9 g. Les pourcentages pondéraux en NaOH par rapport au $Ca(OH)_2$ (% $NaOH/Ca(OH)_2$) des trois laits de chaux sont respectivement de 1,3%, 3,2% et 8% et leur pH théorique de 13,5, 13,9 et 14,3.

Le floculant organique anionique utilisé dans les exemples est mis sur le marché sous la dénomination commerciale de « OPTIFLOC 4% anion » par la société Kemira Chemicals S.A. On peut aussi par exemple utiliser les polymères EM 630, EM 635 disponible auprès de la société SNF Floerger®

Dans les exemples qui suivent, à moins d'indication contraire, les pour-cents sont exprimés en poids.

## Exemple 1

Une boue d'épuration industrielle présentant une teneur en matière sèche (MS) de 1 % est traitée selon l'invention par ajout de lait de chaux et d'un floculant anionique et ensuite déshydratée suivant une procédure simulant la déshydratation en centrifugeuse. La dose de floculant est de 0,9% de matière active par rapport à la teneur en matière sèche de la boue à traiter. La dose de chaux, ramenée en équivalent de $Ca(OH)_2$ par rapport à MS, est de 20,5%.

Selon le mode préféré de l'invention, cette opération est répétée en remplaçant le lait de chaux par le lait de chaux additionné de NaOH tel que décrit ci-dessus et contenant 3,2% de NaOH par rapport au $Ca(OH)_2$.

A titre de comparaison, le traitement est mis en oeuvre à une troisième reprise, mais cette fois sans ajout de lait de chaux. La floculation a lieu avec du floculant cationique, comme recommandé dans l'art antérieur, utilisé à la dose minimale permettant d'obtenir un floc égouttable, soit 3,1% de matière active par rapport à MS.

Les résultats de matière sèche après déshydratation (colonne MSAD%) et la réduction de quantité de boue (Q2-Q1)/Q1, qui évalue théoriquement l'effet de l'ajout du lait de chaux sur la quantité de boue produite, sont repris au Tableau 1. Q1 représente la quantité de boue produite sans ajout de chaux et Q2 la quantité de boue produite lorsque la chaux est ajoutée avant la déshydratation. Le type de lait de chaux, le type de floculant, la dose de floculant et la dose de chaux mis en oeuvre pour chaque essai sont également présentés dans ce tableau.

Dans le cadre de cet exemple, l'utilisation selon l'invention de lait de chaux et de lait de chaux additionné de NaOH permet de diviser par trois la dose de floculant à mettre en oeuvre pour la floculation et permet de réduire les quantités de boue. Par ailleurs, la réduction de la quantité de boue est plus importante lorsque le lait de chaux additionné de NaOH est mis en oeuvre (9,1 % au lieu de 5,6 %).

**Tableau 1.**

| Type de lait de chaux | Type de floculant | Dose de floculant % mat. active / MS | Dose de chaux % Ca(OH)$_2$/MS | MSAD % | $\dfrac{Q2-Q1}{Q1}$ |
|---|---|---|---|---|---|
| Sans | cationique | 3,10% | | 14,1% | |

(suite)

| Type de lait de chaux | Type de floculant | Dose de floculant % mat. active / MS | Dose de chaux % Ca (OH)$_2$/MS | MSAD % | $\frac{Q2-Q1}{Q1}$ |
|---|---|---|---|---|---|
| LDC à 20% selon l'invention | anionique | 0,90% | 20,5% | 18,0% | -5,6% |
| LDC à 20% + 3,2% NaOH/Ca(OH)$_2$ selon l'invention | anionique | 0,90% | 20,5% | 18,7% | -9,1% |
| LDC = lait de chaux<br>MS = matière sèche de la boue avant traitement<br>MSAD = matière sèche après déshydratation. | | | | | |

## Exemple 2

Une boue d'épuration urbaine présentant une teneur en matière sèche de 4,1% est traitée selon l'invention avec du lait de chaux contenant 1,3 % de NaOH par rapport à Ca(OH)$_2$ et floculée au moyen d'un floculant anionique et ensuite déshydratée comme à l'exemple 1.

Cette opération est répétée en utilisant soit du lait de chaux contenant 3,2% de NaOH/Ca(OH)$_2$, soit du lait de chaux contenant 8% de NaOH/Ca(OH)$_2$.

A titre de comparaison, le traitement de la boue est effectué sans ajout de lait de chaux. Dans ce dernier cas la floculation est réalisée avec du floculant cationique, utilisé à la dose minimale permettant d'obtenir un floc égouttable.

Les résultats sont repris au Tableau 2, de façon analogue au Tableau 1. Le type de lait de chaux, le type de floculant, la dose de floculant et la dose de chaux mis en oeuvre pour chaque essai sont également présentés dans ce tableau.

Dans le cadre de cet exemple, l'utilisation de lait de chaux additionné de NaOH permet de diviser par deux la dose de floculant à mettre en oeuvre pour la floculation et de diminuer les quantités de boue de 4 à 6 %. Cette diminution est d'autant plus importante que la quantité de soude ajoutée au lait de chaux est élevée.

**Tableau 2**

| Type de lait de chaux | Type de floculant | Dose de floculant % mat. active / MS | Dose de chaux % Ca (OH)$_2$/MS | MSAD % | $\frac{Q2-Q1}{Q1}$ |
|---|---|---|---|---|---|
| Sans | cationique | 1,05% | | 21,4% | |
| LDC à 20% +1,3% NaOH/Ca(OH)$_2$, selon l'invention | anionique | 0,53% | 30,0% | 28,9% | -3,7% |
| LDC à 20% + 3,2% NaOH/Ca(OH)$_2$ selon l'invention | anionique | 0,53% | 30,0% | 29,0% | -4,1% |
| LDC à 20% + 8% NaOH/Ca(OH)$_2$, selon l'invention | anionique | 0,53% | 30,0% | 29,7% | -6,3% |

## Exemple 3

Une boue d'épuration urbaine présentant une teneur en matière sèche de 3,5 % est traitée selon l'invention avec une dose de 30 % de Ca(OH)$_2$/MS, soit au moyen d'un lait de chaux à 20% MS, soit avec un tel lait de chaux activé au moyen de NaOH à raison de 8% de NaOH/Ca(OH)$_2$. L'évolution du pH de la boue d'épuration après l'ajout de chaux est alors enregistrée jusqu'à l'obtention de valeurs supérieures à 12. La Figure 1 annexée présente les évolutions de pH obtenues.

La Figure 1 met très clairement en évidence la montée en pH plus rapide de la boue traitée avec du lait de chaux activé à la soude. Dans ce cas la floculation avec un floculant anionique peut se faire déjà 30 secondes après le chaulage, alors que, lorsque du lait de chaux non activé est utilisé, cette durée est au minimum de 80 secondes.

**Exemple 4**

Une boue d'épuration urbaine présentant une teneur en matière sèche de 3,1 % est traitée avec une dose de 30 % de chaux/MS soit avec une chaux vive défillérisée, correspondant à l'état antérieur de la technique et présentant un $t_{pH12}$ de 330 s , soit selon l'invention avec une chaux vive à réactivité élevée, présentant un $t_{pH12}$ de 44 s ou encore avec une chaux vive partiellement éteinte, présentant un taux d'hydratation de 10% et un $t_{pH12}$ de 28s. La Figure 2 présente les évolutions de pH obtenues.
La Figure 2 montre l'effet du type de chaux vive utilisée sur le temps nécessaire à l'obtention d'un pH supérieur à 12 dans la boue traitée. Ce délai est largement supérieur à 5 minutes (349 s) dans le cas de la chaux vive selon l'art antérieur. Ce temps est par contre bien inférieur à 2 minutes dans le cas des deux chaux vives suivant l'invention (respectivement 31 s et 70 s). Seuls ces deux produits permettront, selon l'invention, la floculation des boues avec un floculant anionique en amont des procédés de déshydratation en continu les plus courants.

**Exemple 5**

Une boue d'épuration urbaine présentant une teneur en matière sèche de 3,3% est traitée avec une solution de soude à 50% en vue d'augmenter le pH de celle-ci à une valeur supérieure à 12. Des essais de floculation de cette boue à pH supérieur à 12 sont réalisés par ajout de doses croissantes d'une solution de floculant anionique à 3g/dm$^3$ de matière active. Malgré la mise en oeuvre d'un dose maximale de 5%/MS de matière active de floculant anionique, la floculation de la boue n'a pas eu lieu.

**Exemple 6**

Une boue d'épuration urbaine présentant une teneur en matière sèche de 3,3 % est traitée selon l'invention avec les deux chaux vives suivant l'invention, utilisées à l'exemple 4. Elle est floculée avec du floculant anionique, laissée au repos pendant 15 minutes et ensuite déshydratée suivant une procédure simulant la déshydratation en centrifugeuse.
A titre de comparaison, cette opération est répétée sans ajout de chaux ou en ajoutant avant la floculation de la chaux vive défillérisée selon l'art antérieur, utilisée dans l'exemple 4. Dans ces deux derniers cas, la floculation est réalisée avec du floculant cationique, utilisé à la dose minimale permettant d'obtenir un floc égouttable.
Les résultats sont repris au Tableau 3. Le floc obtenu après ajout de chaux vive défillérisée s'est altéré au cours des 15 minutes qui ont précédé l'étape de déshydratation. Pour cette variante de l'exemple, la MSDA et le rapport (Q2-Q1)/Q1 n'ont pu être établis. Par contre l'utilisation des chaux vives selon l'invention donne un floc stable pendant la période de repos avant la déshydratation, permet de diviser environ par deux la dose de floculant à mettre en oeuvre et aboutit à une légère diminution de la quantité de boue produite.

**Tableau 3**

| Type de lait de chaux | $t_{pH12}$ | Type de floculant | Dose de floculant % mat. active / MS | Dose de chaux % $Ca(OH)_2$/ MS | MSDA % | $\frac{Q2-Q1}{Q1}$ |
|---|---|---|---|---|---|---|
| Sans | | cationique | 1,00% | | 23,2% | |
| Chaux vive défillérisée | 330 s | cationique | 1,05% | 30,0% | - | - |
| Chaux vive à réactivité élevée selon l'invention | 44 s | anionique | 0,50% | 30,0% | 32,3% | -0,5% |
| Chaux vive partiellement éteinte selon l'invention | 28 s | anionique | 0,50% | 30,0% | 32,0% | -0,2% |

L'ensemble de ces exemples illustre parfaitement les avantages du procédé de traitement des boues suivant l'invention ainsi que des boues traitées selon l'invention.

Il doit être entendu que la présente invention n'est en aucune façon limitée aux modes de réalisation décrits ci-dessus et que bien des modifications peuvent y être apportées sans sortir du cadre des revendications annexées.

**Revendications**

1. Procédé de traitement de boues comprenant

   - une addition à des boues présentant une première valeur de pH d'un agent basique à base de chaux, en vue d'une élévation du pH à une deuxième valeur supérieure à la première,
   - une addition d'au moins un polymère organique anionique, actif à ladite deuxième valeur de pH,
   - une floculation des boues, et
   - une séparation dans les boues floculées entre des boues déshydratées et une phase liquide,

   **caractérisé en ce que** le polymère organique est un floculant organique anionique et **en ce que** les boues à déshydrater sont des boues organiques ou huileuses, qui présentent comme première valeur de pH susdite, une valeur inférieure à 9 et l'agent à base de chaux provoque ladite élévation de pH jusqu'à ladite deuxième valeur susdite en moins de 5 minutes.

2. Procédé suivant la revendication 1, dans lequel ledit floculant organique anionique est un polymère anionique présentant un poids moléculaire moyen supérieur à 500.000 Da, de préférence supérieur à 1.000.000 Da, de manière plus préférentielle entre $5.10^6$ et $35.10^6$ Da, et de la manière la plus préférentielle entre $15.10^6$ et $30.10^6$ Da.

3. Procédé suivant la revendication 1 ou la revendication 2, **caractérisé en ce que** ladite deuxième valeur de pH est égale ou supérieure à 11, de préférence égale ou supérieure à 12.

4. Procédé suivant l'une quelconque des revendications 1 à 3, **caractérisé en ce que** ladite élévation du pH dure moins de 3 minutes, de préférence moins de 2 minutes, en particulier moins de 1 minute.

5. Procédé suivant l'une quelconque des revendications 1 à 4, **caractérisé en ce que** l'addition de l'agent basique à base de chaux et l'addition dudit au moins un floculant organique anionique ont lieu simultanément ou d'une manière séparée dans le temps.

6. Procédé suivant l'une quelconque des revendications 1 à 5, **caractérisé en ce que** l'agent basique à base de chaux est choisi parmi le groupe constitué de chaux sous forme vive, sous forme éteinte partiellement ou totalement pulvérulente ou sous forme éteinte en suspension dans une phase aqueuse qui nécessite, pour atteindre un pH de 12 dans une solution aqueuse de $NH_4Cl/(NH_4)_2HPO_4$ présentant un pH initial de 7,5, un temps $t_{pH12}$ égal ou inférieur à 90 secondes.

7. Procédé suivant la revendication 6, **caractérisé en ce que** les chaux susdites sont formées de particules ayant un $d_{50}$ égal ou inférieur à 30 $\mu$m.

8. Procédé suivant l'une des revendications 6 et 7, **caractérisé en ce que** la chaux est une chaux vive partiellement éteinte, présentant une proportion de chaux éteinte située entre 1 et 20% en poids.

9. Procédé suivant l'une quelconque des revendications 6 à 8, **caractérisé en ce que** la chaux est une chaux vive partiellement éteinte ou un lait de chaux contenant une teneur en hydroxyde de métal alcalin.

10. Procédé suivant la revendication 9, **caractérisé en ce que** la chaux contient une teneur > 0 et < 10% en poids d'hydroxyde de métal alcalin.

11. Procédé suivant l'une quelconque des revendications 1 à 10, **caractérisé en ce que** ledit au moins un floculant organique est choisi parmi le groupe constitué de polyélectrolytes à base de polymères ou copolymères d'acide acrylique, d'acrylate, d'acrylamide et de leurs mélanges.

**Claims**

1. Sludge treatment method, comprising

    - an addition, to sludge having a first pH value, of a basic agent based on lime, in order to raise the pH to a second value higher than the first,
    - an addition of at least one anionic organic polymer, active at the said second pH value,
    - a flocculation of the sludge, and
    - a separation in the flocculated sludge between dewatered sludge and a liquid phase.

    **characterised in that** the organic polymer is an anionic organic flocculant and **in that** the sludges to be dewatered are organic or oily sludges having, as the aforementioned first pH value, a value below 9, and **in that** the basic agent based on lime causes the said rise in pH up to the aforementioned said second value in less than 5 minutes.

2. Method according to claim 2, in which the said anionic organic flocculant is an anionic polymer having a mean molecular weight greater than 500,000 Da, preferably greater than 1,000,000 Da, more preferentially between $5.10^6$ and $35.10^6$ Da, and most preferentially between $15.10^6$ and $30.10^6$ Da.

3. Method according to claim 1 or claim 2, **characterised in that** the said second pH value is equal to or greater than 11, preferably equal to or greater than 12.

4. Method according to any one of claims 1 to 3, **characterised in that** the said rise in pH lasts for less than 3 minutes, preferably less than 2 minutes, in particular less than 1 minute.

5. Method according to any one of claims 1 to 4, **characterised in that** the addition of the basic agent based on lime and the addition of the said at least one anionic organic flocculant take place simultaneously or separate in time.

6. Method according to any one of claims 1 to 5, **characterised in that** the basic agent based on lime is chosen from the group consisting of lime as quick lime, in partially or totally slaked powdery form or in slaked form in suspension in an aqueous phase that requires, in order to reach a pH of 12 in aqueous solution of $NH_4Cl/(NH_4)_2HPO_4$ having an initial pH of 7.5, a time $t_{pH12}$ equal to or lower than 90 seconds.

7. Method according to claim 6, **characterised in that** the aforementioned limes are formed by particles having a $d_{50}$ equal to or less than 30 $\mu$m.

8. Method according to one of claims 6 and 7, **characterised in that** the lime is a partially slaked quick lime having a proportion of slaked lime situated between 1% and 20% by weight.

9. Method according to any one of claims 6 to 8, **characterised in that** the lime is a partially slaked quick lime or a milk of lime containing a proportion of alkali metal hydroxide.

10. Method according to claim 9, **characterised in that** the lime contains a proportion by weight > 0 and < 10% of alkali metal hydroxide.

11. Method according to any one of claims 1 to 10, **characterised in that** the said at least one organic flocculant is chosen from the group consisting or polyelectrolytes based on polymers or copolymers of acrylic acid, acrylate, acrylamide and mixtures thereof.


**Patentansprüche**

1. Verfahren zur Behandlung von Schlamm, das Folgendes umfasst:

    - eine Zugabe eines basischen Mittels auf Kalkbasis zu Schlamm, der einen ersten pH-Wert aufweist, zwecks einer Erhöhung des pH-Werts auf einen zweiten Wert, der höher als der erste ist,
    - eine Zugabe von mindestens einem anionischen organischen Polymer, das bei dem zweiten pH-Wert aktiv ist,
    - eine Flockung des Schlamms und
    - eine Trennung in dem geflockten Schlamm zwischen entwässertem Schlamm und einer flüssigen Phase,

**dadurch gekennzeichnet, dass** das organische Polymer ein anionisches organisches Flockungsmittel ist und dass der zu entwässernde Schlamm organischer oder öliger Schlamm ist, der als den oben genannten ersten pH-Wert einen Wert unter 9 aufweist und das Mittel auf Kalkbasis die Erhöhung des pH-Werts auf den oben genannten zweiten Wert in weniger als 5 Minuten bewirkt.

2. Verfahren nach Anspruch 1, in dem das anionische organische Flockungsmittel ein anionisches Polymer ist, das ein mittleres Molekulargewicht von mehr als 500.000 Da, vorzugsweise mehr als 1.000.000 Da, mehr bevorzugt zwischen $5x10^6$ und $35x10^6$ Da und noch mehr bevorzugt zwischen $15x10^6$ und $30x10^6$ Da aufweist.

3. Verfahren nach Anspruch 1 oder 2, **dadurch gekennzeichnet, dass** der zweite pH-Wert gleich oder mehr als 11, vorzugsweise gleich oder mehr als 12 ist.

4. Verfahren nach einem der Ansprüche 1 bis 3, **dadurch gekennzeichnet, dass** die Erhöhung des pH-Werts weniger als 3 Minuten, vorzugsweise weniger als 2 Minuten, insbesondere weniger als 1 Minute dauert.

5. Verfahren nach einem der Ansprüche 1 bis 4, **dadurch gekennzeichnet, dass** die Zugabe des basischen Mittels auf Kalkbasis und die Zugabe des mindestens einen anionischen organischen Flockungsmittels gleichzeitig oder zeitlich getrennt erfolgen.

6. Verfahren nach einem der Ansprüche 1 bis 5, **dadurch gekennzeichnet, dass** das basische Mittel auf Kalkbasis aus der Gruppe ausgewählt ist, die aus Branntkalk, teilweise oder vollständig gelöschtem Kalkpulver oder gelöschtem Kalk in Suspension in einer wässrigen Phase besteht, der zum Erzielen eines pH-Werts von 12 in einer wässrigen Lösung von $NH_4Cl/(NH_4)_2HPO_4$, die einen pH-Ausgangswert von 7,5 aufweist, eine Zeit $t_{pH12}$ von gleich oder weniger als 90 Sekunden erfordert.

7. Verfahren nach Anspruch 6, **dadurch gekennzeichnet, dass** die oben genannten Kalke aus Teilchen gebildet werden, die einen $d_{50}$-Wert von gleich oder weniger als 30 $\mu$m aufweisen.

8. Verfahren nach einem der Ansprüche 6 und 7, **dadurch gekennzeichnet, dass** der Kalk ein teilweise gelöschter Branntkalk ist, der einen Anteil von gelöschtem Kalk aufweist, der zwischen 1 und 20 Gew.-% liegt.

9. Verfahren nach einem der Ansprüche 6 bis 8, **dadurch gekennzeichnet, dass** der Kalk ein teilweise gelöschter Branntkalk oder eine Kalkmilch ist, die einen Alkalimetall-Hydroxid-Gehalt enthält.

10. Verfahren nach Anspruch 9, **dadurch gekennzeichnet, dass** der Kalk einen Gehalt von > 0 bis < 10 Gew.-% Alkalimetall-Hydroxid enthält.

11. Verfahren nach einem der Ansprüche 1 bis 10, **dadurch gekennzeichnet, dass** das mindestens eine organische Flockungsmittel aus der Gruppe ausgewählt ist, die aus Polyelektrolyten auf Basis von Acrylsäure-, Acrylat- und Acrylamidpolymeren oder -copolymeren und deren Gemischen besteht.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006030102 A
- EP 0976436 A1
- EP 1154958 B1
- EP 1154958 A
- WO 2005014495 A
- WO 9605142 A
- JP 54025268 B
- JP 4040286 A

**Littérature non-brevet citée dans la description**

- *Acta 5th European Biosolids and Organic Residuals Conference,* Novembre 2000, 66
- **CHANG, J. ; ABU-ORF, M. ; DENTEL, S.** Alkylamine odors from degradation of flocculant polymers in sludges. *Water Research,* 2005, vol. 39 (14), 3369-3375